# EUROPÄISCHE PATENTSCHRIFT

(11) **EP 3 552 056 B1**
(45) Veröffentlichungstag und Bekanntmachung des Hinweises auf die Patenterteilung: **17.06.2020**
(21) Anmeldenummer: 18755775.6
(22) Anmeldetag: 10.08.2018
(51) Int. Cl.: G02F 1/13, G02F 1/1335

(54) **BILDSCHIRM FÜR EINEN FREIEN UND EINEN EINGESCHRÄNKTEN SICHTMODUS UND VERWENDUNG DESSELBEN**
SCREEN FOR A FREE VIEWING MODE AND A RESTRICTED VIEWING MODE, AND USE OF SAME
ÉCRAN POUR MODE DE VISUALISATION LIBRE ET MODE DE VISUALISATION RESTREINT ET UTILISATION DE CELUI-CI

(30) Priorität: 14.08.2017 DE 102017007669
(43) Veröffentlichungstag der Anmeldung: 16.10.2019
(73) Patentinhaber: siOPTICA GmbH, 07745 Jena (DE)
(72) Erfinder: KLIPPSTEIN, Markus, 07751 Jena (DE); SCHWARZ, Juergen, 99510 Apolda (DE); NARI, Ambrose Peter, 07745 Jena (DE); SCHROETER, Uwe, 07774 Dornburg-Camburg (DE); ALKHIMENKO, Stepan, 07743 Jena (DE); JAHRMARKT, Uwe, 07745 Jena (DE)
(74) Vertreter: Gleim Petri Oehmke Patent- und Rechtsanwaltspartnerschaft mbB
(86) Internationale Anmeldenummer: PCT/EP2018/071765
(87) Internationale Veröffentlichungsnummer: WO 2019/034557

(56) Entgegenhaltungen:
- CN-U- 205 670 225
- US-A1- 2004 239 580

## Beschreibung

### Gebiet der Erfindung

In den letzten Jahren wurden große Fortschritte zur Verbreiterung des Sehwinkels bei LCDs erzielt. Allerdings gibt es oft Situationen, in denen dieser sehr große Sehbereich eines Bildschirms von Nachteil sein kann. Zunehmend werden auch Informationen auf mobilen Geräten wie Notebooks und Tablet-PCs verfügbar, wie Bankdaten oder andere, persönliche Angaben, und sensible Daten. Dem entsprechend brauchen die Menschen eine Kontrolle darüber, wer diese sensiblen Daten sehen darf; sie müssen wählen können zwischen einem weiten Betrachtungswinkel, um Informationen auf ihrem Display mit anderen zu teilen, z.B. beim Betrachten von Urlaubsfotos oder auch für Werbezwecke. Andererseits benötigen sie einen kleinen Betrachtungswinkel, wenn sie die Bildinformationen vertraulich behandeln wollen.

Eine ähnliche Problemstellung ergibt sich im Fahrzeugbau: Dort darf der Fahrer bei eingeschaltetem Motor nicht durch Bildinhalte, wie etwa digitale Entertainmentprogramme, abgelenkt werden, während der Beifahrer selbige jedoch auch während der Fahrt konsumieren möchte. Mithin wird ein Bildschirm benötigt, der zwischen den entsprechenden Darstellungsmodi umschalten kann.

### Stand der Technik

Zusatzfolien, die auf Mikro-Lamellen basieren, wurden bereits für mobile Displays eingesetzt, um deren optischen Datenschutz zu erreichen. Allerdings waren diese Folien nicht (um)schaltbar, sie mussten immer erst per Hand aufgelegt und danach wieder entfernt werden. Auch muss man sie separat zum Display transportieren, wenn man sie nicht gerade braucht. Ein wesentlicher Nachteil des Einsatzes solcher Lamellen-Folien ist ferner mit den einhergehenden Lichtverlusten verbunden.

Die US 6,765,550 B2 beschreibt einen solchen Sichtschutz durch Mikro-Lamellen. Größter Nachteil ist hier die mechanische Entfernung bzw. der mechanische Anbau des Filters sowie der Lichtverlust im geschützten Modus.

In der US 5,993,940 A wird der Einsatz einer Folie beschrieben, die auf ihrer Oberfläche gleichmäßig angeordnete, kleine Prismenstreifen hat, um einen Privacy-Modus zu erzielen. Entwicklung und Herstellung sind recht aufwändig.

In der WO 2012/033583 A1 wird die Umschaltung zwischen freier und eingeschränkter Sicht vermittels der Ansteuerung von Flüssigkristallen zwischen sogenannten "chromonischen" Schichten erzeugt. Hierbei entsteht ein Lichtverlust und der Aufwand ist recht hoch.

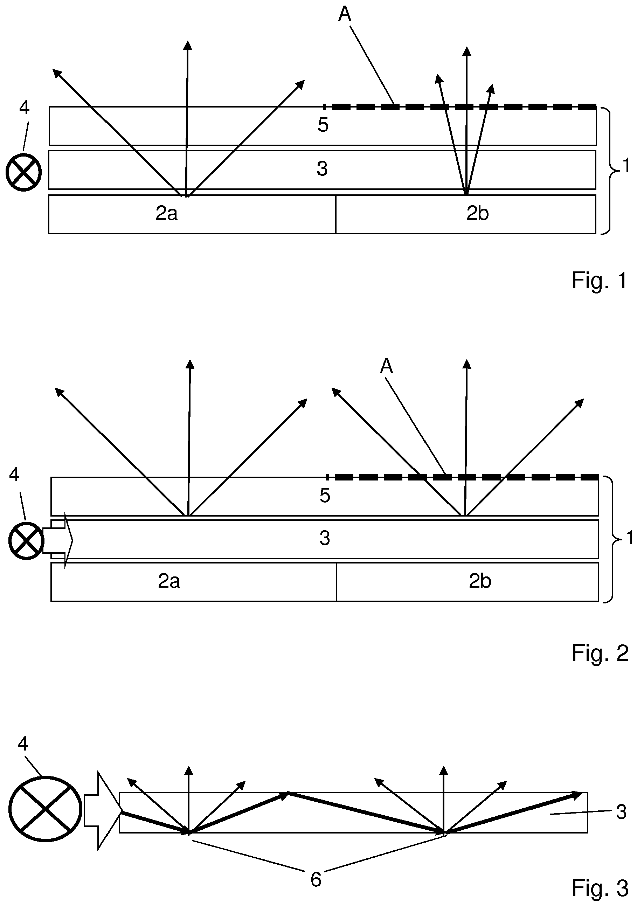

Die Schrift US 2009/0067156 A1 offenbart eine Vielzahl an Ideen, um ein Beleuchtungssystem und ein Bildschirmgerät auszugestalten. Die dort in den Figuren 3A und 3B abgebildete Variante verwendet insbesondere zwei Hintergrundbeleuchtungen, sogenannte Backlights, bestehend aus keilförmigen Lichtleitern, und ein LCD-Panel, wobei das hintere Backlight 40 zwingend einen weiten Beleuchtungswinkel und das vordere Backlight 38 zwingend einen schmalen Beleuchtungswinkel erzeugen soll. Unklar bleibt hierbei jedoch die Funktionsweise, wie das Backlight 38 einen schmalen Beleuchtungswinkel erzeugen soll, ohne dass das Licht mit einem weiten Beleuchtungswinkel, welches vom Backlight 40 herrührt, beim Durchgang durch das Backlight 38 wesentlich in Licht mit einem schmalen Beleuchtungswinkel umgewandelt wird.

Zur Ausgestaltung nach Fig. 5 der US 2009/0067156 A1 ist zu bemerken, dass beide Lichtleiter 46 und 48 jeweils "narrow light", also Licht mit einem schmalen Beleuchtungswinkel, produzieren. Das Licht des Lichtleiters 48 wird erst durch einen aufwändig mit Prismenstrukturen zu erstellenden Teilspiegel 50 in "wide light", also Licht mit einem weiten Beleuchtungswinkel, umgewandelt. Diese Umwandlung beschneidet die Lichtintensität extrem, da das zunächst in einen schmalen Beleuchtungswinkel abgestrahlte Licht, welches als einziges Licht zur Verfügung steht, dann in einen großen Beleuchtungswinkel, i.d.R. den Halbraum, aufgefächert wird. Dies hat zur Folge, dass je nach Parametern die Helligkeit um einen Faktor 5 oder mehr verringert wird (bezogen auf die Leuchtdichte). Es handelt sich also um eine praktisch wenig relevante Ausgestaltung.

In der Ausgestaltung nach Fig. 7 der US 2009/0067156 A1 ist zwingend eine Phosphorschicht notwendig, diese soll UV-Licht in sichtbares Licht umwandeln. Dieser Aufwand ist groß und bei dem Wunsch nach hinreichend Licht aus dem Backlight, um ein LCD-Panel lesbar zu beleuchten, werden sehr große Intensitäten an UV-Licht benötigt. Mithin ist dies teuer, aufwändig und schon von der Abschirmung der benötigten UV-Strahlung her nicht praktikabel.

Die US 2012/0235891 A1 beschreibt ein sehr aufwändiges Backlight in einem Bildschirm. Dort kommen gemäß Fig. 1 und 15 nicht nur mehrere Lichtleiter zum Einsatz, sondern auch weitere komplexe optische Elemente wie etwa Mikrolinsenelemente 40 und Prismenstrukturen 50, die das Licht von der hinteren Beleuchtung auf dem Weg zur vorderen Beleuchtung umformen. Dies ist teuer und aufwändig umzusetzen und ebenso mit Lichtverlust verbunden. Gemäß der Variante nach Fig. 17 in der US 2012/0235891 A1 produzieren beide Lichtquellen 4R und 18 Licht mit einem schmalen Beleuchtungswinkel, wobei das Licht von der hinteren Lichtquelle 18 erst aufwändig in Licht mit einem großen Beleuchtungswinkel, umgewandelt wird. Diese komplexe Umwandlung ist - wie weiter oben schon bemerkt - stark helligkeitsmindernd.

Gemäß der JP 2007-155783 A werden spezielle, aufwändig zu berechnende und herzustellende optische Oberflächen 19 genutzt, die dann Licht je nach Lichteinfallswinkel in verschiedene schmale oder breite Bereiche ablenken. Diese Strukturen ähneln Fresnel-Linsen. Ferner sind Störflanken vorhanden, die Licht in unerwünschte Richtungen ablenken. Somit bleibt unklar, ob wirklich sinnvolle Lichtverteilungen erreicht werden können.

Nach Lehre der GB 2428128 A werden zur Erzielung einer eingeschränkten Sicht zusätzliche, vom Bildschirm deutlich entfernte Lichtquellen, die ein auf dem Bildschirm angebrachtes Hologramm beleuchten, verwendet, um den Seiteneinblick mit speziellen Wellenlängen zu überlagern. Nachteilig sind hierbei der benötigte Abstand der Lichtquellen vom Bildschirm und der Aufwand, entsprechende Hologramme herzustellen.

In der US Schrift 2013/0308185 A1 wird ein spezieller, mit Stufen ausgebildeter Lichtleiter beschrieben, der Licht auf einer Großfläche in verschiedene Richtungen abstrahlt, je nachdem, aus welcher Richtung er von einer Schmalseite aus beleuchtet wird. Im Zusammenspiel mit einem transmissiven Bildwiedergabeeinrichtung, z.B. einem LC-Display, kann somit ein zwischen freiem und eingeschränktem Sichtmodus schaltbarer Bildschirm erzeugt werden. Nachteilig ist hierbei u.a., dass der eingeschränkte Sichteffekt entweder nur für links/rechts oder aber für oben/unten, nicht aber für links/rechts/oben/unten gleichzeitig erzeugt werden kann, wie es etwa für bestimmte Zahlungsvorgänge nötig ist. Hinzu kommt, dass auch im eingeschränkten Sichtmodus aus geblockten Einsichtwinkeln immer noch ein Restlicht sichtbar ist.

Die WO 2015/121398 A1 der Anmelderin beschreibt eine schaltbare Beleuchtungseinrichtung und deren Verwendung. Diese Technologie offenbart jedoch keine Möglichkeit, um nur einen Teil des Bildschirms zwischen einem freien und einen eingeschränkten Sichtmodus umzuschalten.

Weiterhin beschreibt die US 6,608,614 B1 ein LED-basiertes Backlight mit einem erweiterten Farbraum. Dort wird über ein optisches Element, in welches Licht von LEDs verschiedener Farbwerte eingekoppelt wird, eine variable Farbmischung für eine Hintergrundbeleuchtung erzielt. Jedoch offenbart das Dokument keine Lehre für eine Umschaltung zwischen einem freien und einen eingeschränkten Sichtmodus, insbesondere nicht für eine Teilumschaltung.

Ferner offenbart die WO 2011/124599 A1 eine Anordnung zur Lichtabgabe mit mehreren Lichtquellen und einem transparentem Lichtabstrahlelement. Auch hier wird verschiedenartiges Licht in einem optischen Element gemischt. Wiederum offenbart das Dokument keine Lehre für eine Umschaltung zwischen einem freien und einen eingeschränkten Sichtmodus, insbesondere nicht für eine Teilumschaltung.

Die US2004/0239580 A1 schlägt komplementäre Lichtemissionsflächen für einen Bildschirm vor, welche durch stapelartig angeordnete Lichtleiter unterschiedlicher Winkelstreufähigkeit erzeugt werden.

Schließlich offenbart die DE 10 2015 016 134 B3 der Anmelderin einen Bildschirm und ein Verfahren für einen freien und einen eingeschränkten Sichtmodus. Dabei wird die Umschaltung zwischen den Sichtmodi durch Überstrahlung des Bildes zu den eingeschränkten Winkeln hin erzielt, nicht aber durch eine Variation der Hintergrundbeleuchtung, die auch zu einer Teilumschaltbarkeit des Bildschirms führen würde.

Den vorgenannten Verfahren und Anordnungen ist in der Regel der Nachteil gemein, dass sie die Helligkeit des Grundbildschirms deutlich reduzieren und/oder ein aktives, zumindest jedoch ein spezielles, optisches Element zur Modi-Umschaltung benötigen und/oder eine aufwändige sowie teure Herstellung erfordern und/oder die Auflösung im frei betrachtbaren Modus reduzieren. Insbesondere ist es aber in allen bekannten Ausgestaltungen nicht ohne hohen Aufwand möglich, nur einen Teil des Grundbildschirms zwischen einem privaten und einem öffentlichen Modus umzuschalten.

### Beschreibung der Erfindung

Es ist daher Aufgabe der Erfindung, einen Bildschirm zu beschreiben, durch den eine sichere Darstellung von Informationen vermittels eines wahlweise eingeschränkten Betrachtungswinkels realisiert werden kann, wobei in einer weiteren Betriebsart eine freie, möglichst im Betrachtungswinkel uneingeschränkte Sicht möglich sein soll. Dabei soll es möglich sein, den Bildschirm lediglich auf einer Teilfläche seiner Bildfläche entsprechend umzuschalten. Fernerhin soll die Erfindung mit einfachen Mitteln möglichst preisgünstig umsetzbar sein. In beiden Betriebsarten soll eine möglichst hohe Auflösung, besonders bevorzugt die native Auflösung des verwendeten Bildschirms, sichtbar sein. Ferner soll durch die Lösung nur ein möglichst geringer Lichtverlust eingeführt werden.

Diese Aufgabe wird erfindungsgemäß gelöst von einem Bildschirm, wie er in Anspruch 1 definiert ist.

Der besagte eingeschränkte Winkelbereich kann symmetrisch oder asymmetrisch um die Mittelsenkrechte des Bildgebers ausgebildet sein.

Die zweite Hintergrundbeleuchtung ist überwiegend unter der mindestens einen Teilfläche A und die erste Hintergrundbeleuchtung überwiegend unterhalb der restlichen Bildfläche und zwar außerhalb der mindestens einen in zwei Betriebsmodi betreibbaren Teilfläche A angeordnet. Überwiegend bedeutet dabei in der Regel mehr als 90%, meist sogar mehr als 95%, da Anwendungsfälle - beispielsweise die Schrägsicht auf ein in einem Fahrzeug eingebautes Display durch Fahrer oder Beifahrer -denkbar sind, bei denen eine geringfügige Überlappung der ersten und zweiten Hintergrundbeleuchtung von Vorteil sein kann oder die gemeinsamen Grenzen der Hintergrundbeleuchtungen verschoben wird. Es lassen sich auch Bildschirme mit mehreren Teilflächen A1, A2, ... verwenden, für die dies analog gilt.

Bevorzugt ist der besagte Lichtleiter mindestens so groß, wie die gesamte Bildfläche.

Vorteilhaft weist der Lichtleiter auf mindestens einer Teilfläche, deren Flächeninhalt so groß wie der der Teilfläche A ist, bevorzugt jedoch über seine volle Fläche, einen durchschnittlichen Haze-Wert kleiner als 7% aufweist, bevorzugt kleiner als 2%, besonders bevorzugt kleiner als 1%, gemessen gemäß ASTM D1003, wodurch das von der zweiten Hintergrundbeleuchtung mindestens in der Betriebsart B2 in einen eingeschränkten Winkelbereich abgestrahlte Licht beim Durchgang durch den Lichtleiter lediglich geringfügig gestreut wird, d.h. die für die Betriebsart B2 auf der Teilfläche A vorgenommene Lichtbündelung wird nahezu nicht oder quasi nicht durch Streuung im Lichtleiter wieder aufgefächert, was exakt so erwünscht und nötig ist.

Der Lichtleiter kann aus einem thermoplastischen oder thermoelastischen Kunststoff oder aus Glas bestehen. So ist es beispielsweise möglich, dass der Lichtleiter bzw. sein Substrat mindestens 40 Gewichtsprozent Polymethylmethacrylat, bevorzugt mindestens 60 Gewichtsprozent Polymethylmethacrylat, bezogen auf sein Gewicht, umfassen. Alternativ kann es sich beispielsweise um Polycarbonat (PC) oder PET handeln. Andere Ausgestaltungen sind möglich.

Der Lichtleiter weist vorteilhaft auf mindestens einer seiner Großflächen und/oder innerhalb seines Volumens Auskoppelelemente zur Auskopplung von Licht auf. Diese sind bevorzugt, aber nicht unbedingt, derart auf mindestens einer der Großflächen und/oder innerhalb des Volumens des Lichtleiters verteilt, dass die Auskopplung des von den Leuchtmitteln herrührenden Lichtes aus dem Lichtleiter zu mindestens 80% auf (nur) einer der Großflächen des Lichtleiters durchgeführt wird.

Die Auskopplung des von den Leuchtmitteln herrührenden Lichtes aus dem Lichtleiter zu mindestens 80% auf einer der Großflächen des Lichtleiters bedeutet inhärent, dass auf der entsprechend anderen Großfläche maximal 20% des insgesamt ausgekoppelten Lichtes ausgekoppelt wird. Dieser Sachverhalt meint nicht unbedingt, dass in jedem Fall mehr als 80% des durch die Leuchtmittel in den Lichtleiter eingekoppelten Lichts aus der einen Großfläche ausgekoppelt wird, sondern bezieht sich auf mehr als 80% der insgesamt aus beiden Großflächen ausgekoppelten Lichtmenge. Diese Klarstellung ist nötig, da aufgrund von Verlusten in der Regel nie das gesamte in den Lichtleiter eingekoppelte Licht über die Großflächen ausgekoppelt wird. Es ist jedoch bei vorteilhaften Ausgestaltungen der Erfindung tatsächlich auch möglich, wenngleich nicht Bedingung, dass wirklich mehr als 80% des durch die Leuchtmittel in den Lichtleiter eingekoppelten Lichtes auf einer Großfläche flächenartig ausgekoppelt werden.

Die Auskoppelelemente können beispielsweise aus Mikrolinsen und/oder Mikroprismen und/oder diffraktiven Strukturen und/oder Strukturelementen bestehen und maximale Abmessungen von 100µm, bevorzugt jedoch zwischen 1 µm und 15 µm, aufweisen. Im Falle von diffraktiven Strukturen kann es sich beispielsweise um ein Hologramm bzw. ein Gitter/Beugungsgitter handeln. Die Strukturelemente können eine dreidimensionale Ausdehnung, beispielsweise Prismenform, aufweisen.

Wenn also die Auskoppelelemente auf mindestens einer der Großflächen des Lichtleiters angebracht sind, so werden diese vorteilhaft aus einem mit einem Werkzeug strukturierten Kunststoff gebildet, dessen Struktur vermittels eines Werkzeuges eingeprägt wurde. Dies ist z.B. in Massenproduktion möglich, indem auf ein Lichtleitersubstrat ein UV-härtendes Material (z.B. ein Lack, ein Monomer etc.) aufgebracht wird, welches vermittels eines Werkzeuges strukturiert und durch UV-Strahlung ausgehärtet, z.B. polymerisiert wird. Andere durch Strahlung härtende Materialien können ebenfalls eingesetzt werden. Damit können z.B. Gitterstrukturen, Mikroprismen oder auch Mikrolinsen (entweder konvex mit Kunststoffanteil auf der Oberfläche nach außen zeigend, und/oder konkav als Einprägung bzw. Aussparung innerhalb der Oberflächenschicht des strukturierten Kunststoffs) kostengünstig und mit Massenfertigungstauglichkeit umgesetzt werden.

Alternativ können die Auskoppelelemente beispielsweise aus Nanopartikeln, Titandioxid, Bariumsulfat, silsesquioxanen Partikeln und/oder vernetzten Polystyrol-Partikeln mit einer mittleren Partikelgröße von 150 - 500 nm bestehen, welche in einer Konzentration bezogen auf das Gewicht des Lichtleiters von 0.01 - 300 Gew.-ppm (ppm=parts per million, bezogen auf das Gewicht) eingesetzt werden.

Außerdem ist es möglich, dass
- der Lichtleiter aus einem Matrixkunststoff A und darin homogen verteilten Auskoppelelementen aus einem Polymerisat B besteht,
- der Anteil der Auskoppelelemente bestehend aus Polymerisat B 0,01 bis 3 Gewichtsprozent bezogen auf den Matrixkunststoff A beträgt, und
- die Brechzahl nD(B) des Polymerisats B um mindestens 0,01 Einheiten über der Brechzahl nD(A) des Matrixkunststoffs A liegt.

Die erste Hintergrundbeleuchtung in einem erfindungsgemäßen Bildschirm kann zum Beispiel bestehen aus
- einem flächigen Strahler, vorzugsweise einem Lichtleiter mit seitlich oder auf der Rückseite angeordneten Leuchtmitteln,
- mindestens einem in Betrachtungsrichtung vor dem flächigen Strahler angeordneten Diffusor,
- sowie optional weiteren in Betrachtungsrichtung vor dem flächigen Strahler angeordneten optischen Schichten, wie beispielsweise einer BEF-Schicht, einer DBEF-Schicht und/oder einem Neutralfilter zur Abschwächung der Lichtintensität.

Der Neutralfilter dient der definierten und im Wesentlichen wellenlängenunabhängigen Schwächung der Lichtintensität. Dies ist hilfreich, um die jeweils in der Teilfläche A und deren komplementären Bildbereichen wahrgenommenen Helligkeiten möglichst gleichförmig bzw. gleich stark zu gestalten und sichtbare Übergänge der beiden Hintergrundbeleuchtungen in der Bildwahrnehmung zu vermeiden oder zumindest zu verringern.

Die zweite Hintergrundbeleuchtung in einem erfindungsgemäßen Bildschirm kann zum Beispiel bestehen aus
- einem flächigen Strahler, vorzugsweise einem Lichtleiter mit seitlich oder auf der Rückseite angeordneten Leuchtmitteln,
- mindestens einem in Betrachtungsrichtung vor dem flächigen Strahler angeordneten Diffusor,
- mindestens einen in Betrachtungsrichtung vor dem flächigen Strahler angeordneten Lichtkollimator. Bevorzugt kommen hier sogar zwei Lichtkollimatoren, z.B. in Form von um 90 Grad versetzt zueinander ausgerichteten Prismenrastern, zum Einsatz. Bei den Prismenrastern kann es sich beispielsweise um 3M™ Optical Lighting Film handeln. Dazu wird besonders bevorzugt in Betrachtungsrichtung vor dem Prismenraster ein Privacyfilter angeordnet, z.B. ein Mikrolamellenfilter wie er von 3M™ unter dem Vikuiti™ oder von Shin Etsu als VCF angeboten wird.

Beide Hintergrundbeleuchtungen nutzen bevorzugt einen gemeinsamen flächigen Strahler.

Entsprechend kann der flächige Strahler grundsätzlich aufgebaut sein wie ein Backlight, beispielsweise ein Side-light, Edgelight, Direct LED Backlight, edge LED Backlight, OLED oder ein anderer Flächenstrahler, auf welches die genannten anderen Komponenten aufgebracht sind. Ferner kann auch der Einsatz eines sogenannten "Directed Backlights", also einer gerichteten zweiten Hintergrundbeleuchtung, vorgesehen sein.

Ferner können auf der Oberseite des Bildgebers und/oder auf mindestens einer der Großflächen des Lichtleiters Mittel zur Reflexminderung, beispielsweise eine Antiglare- und/oder eine Antireflexbeschichtung, angeordnet sein.

Schließlich ist es möglich, dass mehr als eine Teilfläche A vorgesehen ist, auf der die besagte Umschaltung zwischen den Betriebsarten B1 und B2 durchgeführt werden kann. Dazu können weitere Hintergrundbeleuchtungen vorgesehen sein.

Ein erfindungsgemäßer Bildschirm kann zum Beispiel in einem Fahrzeug verwendet werden, nämlich zur wahlweisen Darstellung von Bildinhalten auf der Teilfläche A lediglich für den Beifahrer in der Betriebsart B2 und gleichzeitig für den Fahrer und den Beifahrer in der Betriebsart B1, während die zur Teilfläche A komplementären Teilfläche(n) der Bildfläche des Bildschirms permanent für Fahrer und Beifahrer sichtbar sind. Damit können auf der Teilfläche A z.B. visuelle Entertainment-Daten wie digitales TV, Videos oder Internet-Daten dargestellt werden, ohne diese visuell dem Fahrer darzubieten. Dies ermöglicht die Einhaltung von Vorschriften zur Verhinderung der Ablenkung des Fahrers von den Fahraufgaben. Auf der zur Teilfläche A komplementären Bildfläche können für den Fahrer relevante Inhalte angezeigt werden, etwa Navigationsbilder und -texte, Bedienoberflächen für Radio, Klimaanlage oder dergleichen.
Ein erfindungsgemäßer Bildschirm kann gleichsam verwendet werden zur Eingabe oder Anzeige von vertraulichen Daten, beispielweise von PIN-Geheimnummern, E-Mails, SMS oder Passwörtern, an Geldautomaten, Zahlungsterminals oder mobilen Geräten. Viele andere Verwendungsfälle sind denkbar.

Eine weitere vorteilhafte Ausgestaltung der Erfindung sieht vor, dass für die Betriebsart B1 in Abhängigkeit vorgegebenen Grenzwinkeln σ, γ das ausgekoppelte Licht, welches aus dem Lichtleiter in einem Winkel β austritt, an jedem Punkt der Oberfläche des Lichtleiters in Winkelbereichen, die den Bedingungen 80° > β > γ und/oder -80° < β < -σ, mit 10° < γ < 80° und 10° < σ < 80° genügen, bevorzugt γ = σ = 40° oder γ = σ = 20°, gemessen senkrecht zur Oberfläche des Lichtleiters und in mindestens einer von zwei Vorzugsrichtungen maximal 80%, bevorzugt 60% besonders bevorzugt maximal 50% von der Lichtstärke aufweist, die das Licht aufweist, welches von einem solchen Punkt der Oberfläche des Lichtleiters entlang der Normalen der Oberfläche austritt.

Die beiden Vorzugsrichtungen liegen dabei senkrecht zueinander in einer Ebene auf dem Lichtleiter 3 bzw. auf der Fläche der Hintergrundbeleuchtung 2. Im Betrieb, beispielsweise in einem Zahlterminal oder in einem Auto, ist der Bildschirm dann relativ zu seiner äußeren Umgebung fixiert und den Vorzugsrichtungen lassen sich beispielsweise die Begriffe "vertikal" und "horizontal" - unabhängig von einer "Portrait"- oder "Landscape"-Orientierung des Bildschirms - zuordnen, die sich eigentlich auf das äußere Koordinatensystem der Umgebung beziehen. "Vertikal" korrespondiert zu der Richtung von oben nach unten auf dem Bildschirm und "horizontal" zur Richtung von links nach rechts.

Die gewählte Vorzugsrichtung ist dabei oft die vertikale Orientierung. Ein negativer Winkel wird dabei o.B.d.A. (ohne Beschränkung der Allgemeinheit) derjenigen Seite zugeordnet, auf der das Licht eingekoppelt wird, ein Winkel von -90° entspricht also einer Richtung, aus der eingekoppelt wird. Die Grenzwinkel σ, γ werden dabei anhand der für die jeweilige Anwendung gewünschten optischen Leistung fest vorgegeben. Im Falle der bevorzugten Grenzwinkel γ = σ = 40° gilt die Lichtstärkebedingung dann nur für Winkel zwischen -40° und -80° sowie 40° und 80°. Je kleiner die Grenzwinkel σ, γ jeweils sind, umso mehr wird das Licht in der bzw. den entsprechenden Vorzugsrichtungen zur Mittelsenkrechten konzentriert. Beispielsweise im PKW, wo Fahrer und Beifahrer in der Betriebsart B1 in relativ gut zu definierenden Betrachtungswinkeln auf einen Bildschirm mit der erfindungsgemäßen Beleuchtungseinrichtung schauen, können die Grenzwinkel σ, γ eher kleiner als 40° gewählt werden. Demgegenüber können in einem Laptop aufgrund der Klappbarkeit des Bildschirms und des universalen Einsatzszenarios hinsichtlich der Betrachtungswinkel verschiedener Personen Werte um 40° oder größer sinnvoll sein. Die 80°-Grenze kann unter Umständen auch 70° betragen.

Dadurch wird z.B. eine Verminderung von störenden Reflektionen in der Windschutzscheibe, vor allem bei Nachtfahrten, erzielt, wenn die erfindungsgemäße Beleuchtungseinrichtung mit einem Bildschirm in einem Fahrzeug eingebaut ist. Fernerhin wird bei Einhalten der vorgenannten Bedingung eine deutliche Auskopplungseffizienz aus dem Lichtleiter erzielt, ganz ohne den Einsatz von fokussierenden Schichten wie etwa Prismenfolien.

In allen vorgenannten Ausgestaltungen können die besagten Leuchtmittel LEDs bzw. LED-Zeilen oder Laserdioden sein. Andere Varianten sind denkbar und liegen im Rahmen der Erfindung. Weiterhin können die gewünschten eingeschränkten Winkelbereiche für den Modus B2 für eine eingeschränkte Sicht auf der Teilfläche A jeweils für die horizontale und vertikale Richtung unabhängig voneinander definiert und umgesetzt werden. Beispielsweise könnte in der vertikalen Richtung ein größerer Winkel (oder ggf. gar keine Einschränkung) sinnvoll sein, als in der horizontalen Richtung, etwa wenn bei Geldautomaten Personen mit unterschiedlicher Größe ein Bild sehen sollen, während der Seiteneinblick stark oder komplett eingeschränkt bleiben soll. Für POS-Zahlterminals sind hingegen auf Grund von Sicherheitsbestimmungen oftmals Sichteinschränkungen im Modus B2 sowohl in horizontaler als in vertikaler Richtung notwendig.

In einer besonderen Ausgestaltung ist in Betrachtungsrichtung vor dem Bildgeber ein weiterer Lichtleiter mit Mitteln zur Auskopplung von Licht angeordnet, der seitlich von weiteren Leuchtmitteln mit Licht gespeist werden kann. Dieser weitere Lichtleiter kann beispielweise mit den gleichen oder ähnlichen Mitteln wie der weiter oben genannte Lichtleiter unterhalb des Bildgebers umgesetzt werden. In der Betriebsart B1 für einen freien Modus sind hier die weiteren Leuchtmittel ausgeschaltet, so dass das gesamte Bild im Wesentlichen unbeeinflusst von dem weiteren Lichtleiter bleibt. In der Betriebsart B2 hingegen, wenn auf der Teilfläche A die Wahrnehmbarkeit zur Seite hin deutlich reduziert ist, werden die weiteren Leuchtmittel eingeschaltet, wodurch der weitere Lichtleiter Licht, bevorzugt zu einer Seite (links oder rechts) oder auch gleichzeitig nach links und rechts hin, abstrahlt. Dieses Licht überstrahlt die aus einem seitlichen Winkel außerhalb des eingeschränkten Winkels eventuell noch restlich auf der Teilfläche A wahrnehmbaren Artefakte.

Bevorzugt werden der weitere Lichtleiter und/oder die weiteren Leuchtmittel so ausgebildet, dass die besagte Überstrahlung im Wesentlichen nur oberhalb der Teilfläche A gewährleistet ist. Vermittels dieser Ausgestaltung kann also ein eventuell noch unbeabsichtigt vorhandenes Restlicht in der Betriebsart B2 in die eigentlich vor Blicken geschützten Winkelbereiche noch derart überlagert bzw. überstrahlt werden, dass auf der Teilfläche A kein Kontrast mehr wahrnehmbar ist und somit keinerlei Bildwahrnehmung aus den nicht freigegebenen Winkeln mehr möglich ist.

Die entsprechenden weiteren Leuchtmittel sind zur Abstrahlung farbigen oder weißen Lichts ausgebildet. Dabei können die weiteren Leuchtmittel Licht in einer Farbe abstrahlen, welche im von dem transmissiven Bildgeber dargestellten Bild nicht vorkommt.

Alternativ ist es möglich, dass die weiteren Leuchtmittel Licht in einer Farbe abstrahlen, welche im von dem transmissiven Bildgeber dargestellten Bild vorkommt bzw. im Farbspektrum nahe an einer solchen Farbe liegt. Schließlich ist es denkbar, dass die weiteren Leuchtmittel Licht in einer Farbe abstrahlen, die in etwa der Komplementärfarbe einer Farbe, welche im von dem transmissiven Bildgeber dargestellten Bild vorkommt, entspricht. Mit "farbigem Licht" ist insbesondere sichtbares Licht gemeint, welches nicht weiß ist, also z.B. Licht in den Farben rot, grün, blau, türkis, gelb, cyan, magenta oder gelb. Ferner kann dieses Licht wahlweise in verschiedenen Helligkeitsstufen abgestrahlt werden. Außerdem ist es möglich, dass die Farbigkeit des von den weiteren Leuchtmitteln ausgehenden Lichtes auch zeitlich moduliert wird, etwa in Farbe und/oder Helligkeit. Darüber hinaus können die weiteren Leuchtmittel auch mit verschiedenen einzelnen Leuchtmitteln umgesetzt werden, etwa RGB-LEDs in LED-Zeilen, die gleichzeitig oder zeitlich versetzt und/oder räumlich versetzt jeweils Licht unterschiedlicher Farben und/oder unterschiedlicher Helligkeit abstrahlen.

Grundsätzlich bleibt die Leistungsfähigkeit der Erfindung erhalten, wenn die vorbeschriebenen Parameter in bestimmten Grenzen variiert werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Die Erfindung wird im Folgenden an Hand von Zeichnungen, die auch erfindungswesentliche Merkmale zeigen, näher erläutert. Es zeigt
- Fig. 1: eine Prinzipskizze des erfindungsgemäßen Bildschirms in der Betriebsart B2, wobei sich ein Teil der Bildfläche in einem freien Sichtmodus und ein Teil der Bildfläche in einem eingeschränkten Sichtmodus befindet,
- Fig. 2: eine Prinzipskizze des erfindungsgemäßen Bildschirms in der Betriebsart B1, wobei sich die gesamte Bildfläche in einem freien Sichtmodus befindet,
- Fig. 3: eine Prinzipskizze zur Auskopplung von Licht, das seitlich in einen Lichtleiter eingekoppelt wird, aus der unteren Großfläche des Lichtleiters, auf welcher sich die Auskoppelemente befinden,

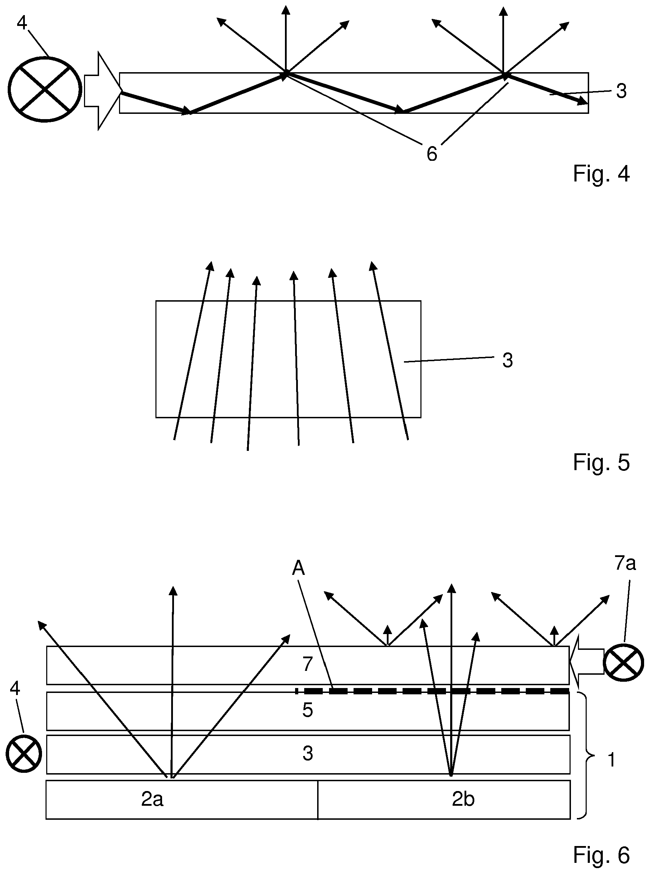

- Fig. 4: eine Prinzipskizze zur Auskopplung von Licht, das seitlich in einen Lichtleiter eingekoppelt wird, aus der oberen Großfläche des Lichtleiters, auf welcher sich die Auskoppelemente befinden,
- Fig. 5: eine Prinzipskizze zum Durchgang von Licht, das aus einer Hintergrundbeleuchtung herrührt, durch einen Lichtleiter,
- Fig. 6: eine Prinzipskizze des erfindungsgemäßen Bildschirms in der Betriebsart B2, wobei sich ein Teil der Bildfläche in einem freien Sichtmodus und ein Teil der Bildfläche in einem eingeschränkten Sichtmodus befindet, und wobei ein weiterer Lichtleiter vor dem Bildgeber angeordnet ist, um eventuell vorhandenes Restlicht bei einer seitlichen Betrachtung zu überstrahlen,

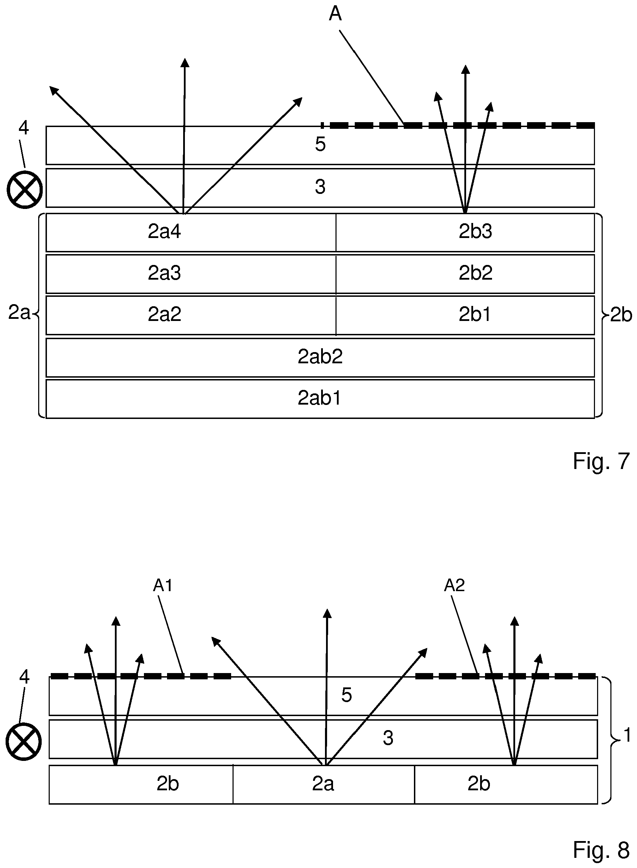

- Fig. 7: eine Prinzipskizze des erfindungsgemäßen Bildschirms in der Betriebsart B2, wobei sich ein Teil der Bildfläche in einem freien Sichtmodus und ein Teil der Bildfläche in einem eingeschränkten Sichtmodus befindet, und wobei die beiden Hintergrundbeleuchtungen in ihre wesentlichen Komponenten aufgegliedert dargestellt sind, sowie
- Fig. 8: eine Prinzipskizze eines erfindungsgemäßen Bildschirms analog zu Fig. 1, jedoch mit mehreren Teilflächen.

Die Zeichnungen sind nicht maßstabsgetreu und geben lediglich Prinzipdarstellungen wieder.

### Ausführliche Beschreibung der Zeichnungen

Die Fig. 1 zeigt eine Prinzipskizze (Schnittdarstellung) des erfindungsgemäßen Bildschirms 1 in der Betriebsart B2, wobei sich eine Teilfläche A (gekennzeichnet als fette Strichlinie und entsprechend etwa der Hälfte der gesamten Bildfläche) der in einem eingeschränkten Sichtmodus und der andere Teil der Bildfläche in einem freien Sichtmodus befindet. Dieser Bildschirm 1 umfasst
- eine flächenartig ausgedehnte erste Hintergrundbeleuchtung 2a, die Licht in einen nicht eingeschränkten Winkelbereich abstrahlt (das Licht ist mit den von der ersten Hintergrundbeleuchtung 2a in divergente Richtungen ausgehenden Strahlen angedeutet), und die überwiegend unterhalb der restlichen Bildfläche außerhalb der besagten Teilfläche A angeordnet ist,
- mindestens eine flächenartig ausgedehnte zweite Hintergrundbeleuchtung 2b, die Licht in einen eingeschränkten Winkelbereich abstrahlt (das Licht ist mit den von der zweiten Hintergrundbeleuchtung 2b in eine schmalen Winkelbereich ausgehenden Strahlen angedeutet), und die überwiegend unterhalb der besagten Teilfläche A angeordnet ist,
- einen in Betrachtungsrichtung vor den beiden Hintergrundbeleuchtungen 2a, 2b angeordneten transmissiven Bildgeber 5, z.B. ein LCD-Panel,
- einen zwischen dem Bildgeber 5 und den beiden Hintergrundbeleuchtungen 2a, 2b gelegenen, plattenförmigen transparenten Lichtleiter 3, welcher derart aufgebaut ist, dass er an mindestens einer seiner Schmalseiten eingekoppeltes Licht über mindestens eine Großfläche auskoppelt,
- seitlich an mindestens einer Schmalseite des Lichtleiters 3 angeordnete Leuchtmittel 4, z.B. eine LED Zeile,
- wobei der Lichtleiter 3 für das von den Hintergrundbeleuchtungen 2a, 2b ausgehende Licht zu mindestens 70% transparent ist.

In der in Fig. 1 dargestellten Betriebsart B2 sind die beiden Hintergrundbeleuchtungen 2a, 2b einund die Leuchtmittel 4 ausgeschaltet. Demgegenüber wird in Fig. 2 eine Prinzipskizze des erfindungsgemäßen Bildschirms in der Betriebsart B1 gezeigt, wobei sich die gesamte Bildfläche in einem freien Sichtmodus befindet. Hierzu sind mindestens die Leuchtmittel 4 eingeschaltet sind. Für ein besonders helles Bild aus dem eingeschränkten Winkelbereich kann z.B. die zweite Hintergrundbeleuchtung 2b zusätzlich eingeschaltet sein. Für ein besonders helles Bild außerhalb der Teilfläche A des Bildgebers 5 kann ferner unabhängig davon auch die erste Hintergrundbeleuchtung 2a eingeschaltet sein.

Der besagte eingeschränkte Winkelbereich kann symmetrisch oder asymmetrisch um die Mittelsenkrechte des Bildgebers 5 ausgebildet sein. So ist es beispielsweise möglich, bei einer asymmetrischen Umsetzung das Bild für einen Beifahrer, der sitzpositionsbedingt schräg auf den Bildschirm 1 sieht, in der Betriebsart B2 immer noch gut sichtbar zu gestalten.

Vorteilhaft weist der Lichtleiter 3 auf einer Teilfläche, deren Flächeninhalt so groß wie der der Teilfläche A ist, bevorzugt jedoch über seine volle Fläche, einen durchschnittlichen Haze-Wert kleiner als 7% aufweist, bevorzugt kleiner als 2%, besonders bevorzugt kleiner als 1%, gemessen gemäß ASTM D1003, wodurch das von der zweiten Hintergrundbeleuchtung 2b mindestens in der Betriebsart B2 in einen eingeschränkten Winkelbereich abgestrahlte Licht beim Durchgang durch den Lichtleiter 3 lediglich geringfügig gestreut wird, d.h. die für die Betriebsart B2 auf der Teilfläche A vorgenommene Lichtbündelung wird nahezu nicht oder quasi nicht durch Streuung im Lichtleiter 3 wieder aufgefächert, was exakt so erwünscht und nötig ist.

Der Lichtleiter 3 kann aus einem thermoplastischen oder thermoelastischen Kunststoff oder aus Glas bestehen. So ist es beispielsweise möglich, dass der Lichtleiter 3 bzw. sein Substrat mindestens 40 Gewichtsprozent Polymethylmethacrylat, bevorzugt mindestens 60 Gewichtsprozent Polymethylmethacrylat, bezogen auf sein Gewicht, umfassen. Alternativ kann es sich beispielsweise um Polycarbonat (PC) oder PET handeln. Andere Ausgestaltungen sind möglich.

Der Lichtleiter 3 weist vorteilhaft auf mindestens einer seiner Großflächen und/oder innerhalb seines Volumens Auskoppelelemente 6 zur Auskopplung von Licht auf. Diese sind bevorzugt, aber nicht unbedingt, derart auf mindestens einer der Großflächen und/oder innerhalb des Volumens des Lichtleiters 3 verteilt, dass die Auskopplung des von den Leuchtmitteln 4 herrührenden Lichtes aus dem Lichtleiter 3 zu mindestens 80% auf einer der Großflächen des Lichtleiters 3 durchgeführt wird.

In Fig. 3 ist eine Prinzipskizze zur Auskopplung von Licht, das seitlich von Leuchtmitteln 4 in einen Lichtleiter 3 eingekoppelt wird, aus der unteren Großfläche des Lichtleiters 3, auf welcher sich die Auskoppelemente 6 befinden, dargestellt, wobei das Licht zwar an der unteren Großfläche des Lichtleiters 3 ausgekoppelt (d.h. aus dem Winkel der Totalreflektion gebracht) wird, jedoch den Lichtleiter 3 tatsächlich über die komplementäre Großfläche (in der Zeichnung hier: die obere Großfläche) verlässt. In der horizontalen Richtung, also senkrecht zur Zeichnungsebene, wird hier das typischerweise Licht in einen großen Winkelbereich ausgekoppelt. Der Ort der Auskoppelelemente 6 ist durch die Zahl 6 angedeutet, jedoch sind die eigentlichen Auskoppelelement 6 hier nicht eingezeichnet, weil sie mikroskopisch klein sein müssen.

Es wird also Licht von den Leuchtmitteln 4, z.B. von LEDs, seitlich in den Lichtleiter 3 eingekoppelt. Auf Grund von Totalreflexion werden Strahlen des eingekoppelten Lichts (fett gezeichnete Strahlen) an der Außenwand wieder zurück in den Lichtleiter 3 geworfen, bis sie schließlich (ggf. zum wiederholten Mal) auf ein Auskoppelelement 6 zur gewünschten Auskopplung treffen. Die Auskopplung ist durch die dünnen Strahlen stilisiert. Die Darstellung in Fig. 3 ist zur besseren Erkennbarkeit stark stilisiert; in der Realität wird eine sehr große Vielzahl an Strahlengängen im Lichtleiter 3 umgesetzt und eine große Vielzahl an Auskoppelelementen 6 eingesetzt.

Fig. 4 zeigt demgegenüber eine Prinzipskizze zur Auskopplung von Licht, das seitlich von Leuchtmitteln 4 in einen Lichtleiter 3 eingekoppelt wird, aus der oberen Großfläche des Lichtleiters 3, auf welcher sich die Auskoppelemente 6 befinden. Es gelten hier sinngemäß die Ausführungen zu Fig. 3. Technisch verschieden ist hier lediglich die Lage und ggf. die Ausgestaltung der Auskoppelelemente 6, die nun auf der Oberseite des Lichtleiters 3 liegen und somit das Licht direkt nach auskoppeln, ohne dass es zum Verlassen des Lichtleiters 3, wie demgegenüber in Fig. 3 gezeigt, erst den Lichtleiter 3 noch einmal quer passieren müsste.

Die Auskopplung des von den Leuchtmitteln 4 herrührenden Lichtes aus dem Lichtleiter 3 zu mindestens 80% auf einer der Großflächen des Lichtleiters 3 bedeutet inhärent, dass auf der entsprechend anderen Großfläche maximal 20% des insgesamt ausgekoppelten Lichtes ausgekoppelt wird. Dieser Sachverhalt meint nicht unbedingt, dass in jedem Fall mehr als 80% des durch die Leuchtmittel 4 in den Lichtleiter 3 eingekoppelten Lichts aus der einen Großfläche ausgekoppelt wird, sondern bezieht sich auf mehr als 80% des insgesamt ausgekoppelten Lichtes. Diese Klarstellung ist wichtig, da aufgrund von Verlusten in der Regel nie das gesamte in den Lichtleiter 3 eingekoppelte Licht über die Großflächen ausgekoppelt wird. Es ist jedoch bei vorteilhaften Ausgestaltungen der Erfindung tatsächlich auch möglich, wenngleich nicht Bedingung, dass wirklich mehr als 80% des durch die Leuchtmittel 4 in den Lichtleiter 3 eingekoppelten Lichtes auf einer Großfläche flächenartig ausgekoppelt werden.

Die Auskoppelelemente 6 können beispielsweise aus Mikrolinsen und/oder Mikroprismen und/oder diffraktiven Strukturen und/oder Strukturelementen bestehen und maximale Abmessungen von 100 µm, bevorzugt zwischen 1 µm und 15 µm, aufweisen. Im Falle von diffraktiven Strukturen kann es sich beispielsweise um ein Hologramm bzw. ein Gitter/Beugungsgitter handeln. Die Strukturelemente können eine dreidimensionale Ausdehnung, beispielsweise Prismenform, aufweisen.

Wenn also die Auskoppelelemente 6 auf mindestens einer der Großflächen des Lichtleiters 3 angebracht sind, so werden diese vorteilhaft aus einem mit einem Werkzeug strukturierten Kunststoff gebildet, dessen Struktur vermittels eines Werkzeuges eingeprägt wurde. Dies ist z.B. in Massenproduktion möglich, indem auf ein Lichtleitersubstrat ein UV-härtendes Material (z.B. ein Lack, ein Monomer etc.) aufgebracht wird, welches vermittels eines Werkzeuges strukturiert und durch UV-Strahlung ausgehärtet, z.B. polymerisiert wird. Andere, z.B. auch durch Strahlung härtende, Materialien können ebenfalls eingesetzt werden.
Damit können z.B. Gitterstrukturen, Mikroprismen oder auch Mikrolinsen (entweder konvex mit Kunststoffanteil auf der Oberfläche nach außen zeigend, und/oder konkav als Einprägung bzw. Aussparung innerhalb der Oberflächenschicht des strukturierten Kunststoffs) kostengünstig und mit Massenfertigungstauglichkeit umgesetzt werden.

Alternativ können die Auskoppelelemente 6 beispielsweise aus Nanopartikeln, Titandioxid, Bariumsulfat, silsesquioxanen Partikeln und/oder vernetzten Polystyrol-Partikeln mit einer mittleren Partikelgröße von 150 - 500 nm bestehen, welche in einer Konzentration bezogen auf das Gewicht des Lichtleiters 3 von 0.01 - 300 Gew.-ppm (ppm = parts per million, bezogen auf das Gewicht) eingesetzt werden.

Außerdem ist es möglich, dass
- der Lichtleiter 3 aus einem Matrixkunststoff A und darin homogen verteilten Auskoppelelementen 6 aus einem Polymerisat B besteht,
- der Anteil der Auskoppelelemente 6 bestehend aus Polymerisat B 0,01 bis 3 Gewichtsprozent bezogen auf den Matrixkunststoff A beträgt, und
- die Brechzahl nD(B) des Polymerisats B um mindestens 0,01 Einheiten über der Brechzahl nD(A) des Matrixkunststoffs A liegt.

Die Fig. 5 zeigt eine Prinzipskizze zum Durchgang von Licht, das z.B. aus einer zweiten Hintergrundbeleuchtung 2b herrührt, durch einen Lichtleiter 3, und zwar durch die beiden Großflächen des Lichtleiters 3 bzw. quer durch dessen Volumen. Die Auskoppelemente 6 spielen dabei eine im Wesentlichen vernachlässigbare Rolle, da das Licht aus der zweiten Hintergrundbeleuchtung 2b herrührt, d.h. nicht seitlich durch eine Schmalseite von Leuchtmitteln 4 in den Lichtleiter 3 eingekoppelt wird und daher nicht bzw. kaum durch Totalreflexion im Lichtleiter 3 hin und her gelenkt wird. Insofern sind die Auskoppelemente 6 hier gar nicht mit eingezeichnet, weil deren Wirkung vernachlässigbar ist.

Die Fig. 6 zeigt eine Prinzipskizze des erfindungsgemäßen Bildschirms in der Betriebsart B2, wobei sich ein Teil der Bildfläche in einem freien Sichtmodus und ein Teil A der Bildfläche in einem eingeschränkten Sichtmodus befindet (Betriebsart B2), und wobei ein weiterer Lichtleiter 7 vor dem Bildgeber 5 angeordnet ist, um eventuell vorhandenes Restlicht bei einer seitlichen Betrachtung zu überstrahlen. In dieser besonderen Ausgestaltung ist in Betrachtungsrichtung vor dem Bildgeber 5 ein weiterer Lichtleiter 7 mit (zeichnerisch nicht dargestellten) Mitteln zur Auskopplung von Licht angeordnet, der seitlich von weiteren Leuchtmitteln 7a mit Licht gespeist werden kann. Dieser weitere Lichtleiter 7 kann beispielweise mit den gleichen oder ähnlichen Mitteln wie der Lichtleiter 3 unterhalb des Bildgebers 5 umgesetzt werden.

In der Betriebsart B1 für einen freien Modus sind hier die weiteren Leuchtmittel 7a ausgeschaltet, so dass das gesamte Bild im Wesentlichen unbeeinflusst von dem weiteren Lichtleiter 7 bleibt. In der Betriebsart B2 hingegen, wenn auf der Teilfläche A die Wahrnehmbarkeit zur Seite hin deutlich reduziert ist, werden die weiteren Leuchtmittel 7a eingeschaltet, wodurch der weitere Lichtleiter 7 Licht, bevorzugt zu einer Seite (links oder rechts) oder auch gleichzeitig nach links und rechts hin (oder auch nach oben und unten), abstrahlt (wie in Fig. 6 durch die langen Pfeile nach links und rechts hin angedeutet ist; der schmale Pfeil in senkrechter Richtung soll andeuten, dass in diese Richtung nur möglichst wenig Licht zur lediglich geringfügigen Bildqualitätsbeeinflussung in Form einer -ungewollten- Kontrastreduktion abgestrahlt wird). Dieses Licht überstrahlt die aus einem seitlichen Winkel außerhalb des eingeschränkten Winkels eventuell noch restlich auf der Teilfläche A wahrnehmbaren Artefakte.

Bevorzugt werden der weitere Lichtleiter 7 und/oder die weiteren Leuchtmittel 7a dann auch nur soweit ausgebildet, dass diese Überstrahlung oberhalb der Teilfläche A gewährleistet ist, wie in Fig. 6 angedeutet ist. Vermittels dieser Ausgestaltung kann also ein eventuell noch unbeabsichtigt vorhandenes Restlicht in der Betriebsart B2 in die eigentlich vor Blicken geschützten Winkelbereiche noch derart überlagert bzw. überstrahlt werden, dass auf der Teilfläche A kein Kontrast mehr wahrnehmbar ist und somit keinerlei Bildwahrnehmung aus den nicht freigegebenen Winkeln mehr möglich ist. Die entsprechenden weiteren Leuchtmittel 7a sind zur Abstrahlung farbigen oder weißen Lichts ausgebildet. Dabei können die weiteren Leuchtmittel 7a Licht in einer Farbe abstrahlen, welche im von dem transmissiven Bildgeber 5 dargestellten Bild nicht vorkommt.

Alternativ ist es möglich, dass die weiteren Leuchtmittel 7a Licht in einer Farbe abstrahlen, welche im von dem transmissiven Bildgeber 5 dargestellten Bild vorkommt bzw. im Farbspektrum nahe an einer solchen Farbe liegt. Schließlich ist es denkbar, dass die weiteren Leuchtmittel 7a Licht in einer Farbe abstrahlen, die in etwa der Komplementärfarbe einer Farbe, welche im von dem transmissiven Bildgeber 5 dargestellten Bild vorkommt, entspricht. Mit "farbigem Licht" ist insbesondere sichtbares Licht gemeint, welches nicht weiß ist, also z.B. Licht in den Farben rot, grün, blau, türkis, gelb, cyan, magenta oder gelb. Ferner kann dieses Licht wahlweise in verschiedenen Helligkeitsstufen abgestrahlt werden. Außerdem ist es möglich, dass die Farbigkeit des von den Leuchtmitteln 7a ausgehenden Lichtes auch zeitlich moduliert wird, etwa in Farbe und/oder Helligkeit. Darüber hinaus können die Leuchtmittel 7a auch mit verschiedenen einzelnen Leuchtmittein 7a1, 7a2, ... umgesetzt werden, etwa RGB-LEDs in LED-Zeilen, die gleichzeitig oder zeitlich versetzt und/oder räumlich versetzt jeweils Licht unterschiedlicher Farben und/oder unterschiedlicher Helligkeit abstrahlen.

Schließlich zeigt die Fig. 7 eine Prinzipskizze des erfindungsgemäßen Bildschirms 1 in der Betriebsart B2, wobei sich ein Teil A der Bildfläche in einem eingeschränkten Sichtmodus und der andere Teil der Bildfläche in einem freien Sichtmodus befindet, und wobei die beiden Hintergrundbeleuchtungen 2a, 2b in ihre Komponenten aufgegliedert dargestellt sind.
Die dort dargestellte erste Hintergrundbeleuchtung 2a in einem erfindungsgemäßen Bildschirm 1 kann zum Beispiel bestehen aus
- einem flächigen Strahler 2ab1, vorzugsweise einem Lichtleiter mit seitlich oder auf der Rückseite angeordneten Leuchtmitteln,
- mindestens einem in Betrachtungsrichtung vor dem flächigen Strahler 2ab1 angeordneten Diffusor 2ab2,
- sowie optional weiteren in Betrachtungsrichtung vor dem flächigen Strahler 2ab1 angeordneten optischen Schichten, wie beispielsweise einer BEF-Schicht 2a2, einer DBEF-Schicht 2a3 und/oder einem Neutralfilter 2a4 zur Abschwächung der Lichtintensität.

Der Neutralfilter 2a4 dient der definierten und im Wesentlichen wellenlängenunabhängigen Schwächung der Lichtintensität. Dies ist hilfreich, um die wahrgenommenen Helligkeiten in derTeilfläche A und deren komplementären Bildbereichen möglichst gleichförmig zu gestalten.

Die in Fig. 7 dargestellte zweite Hintergrundbeleuchtung 2b in einem erfindungsgemäßen Bildschirm 1 kann zum Beispiel bestehen aus
- einem flächigen Strahler 2ab1, vorzugsweise einem Lichtleiter mit seitlich oder auf der Rückseite angeordneten Leuchtmitteln,
- mindestens einem in Betrachtungsrichtung vor dem flächigen Strahler 2ab1 angeordneten Diffusor 2ab2,
- zwei vor dem flächigen Strahler 2ab1 angeordneten Lichtkollimatoren in Form von um 90 Grad versetzt zueinander ausgerichteten Prismenrastern 2b1, 2b2. Bei den Prismenrastern kann es sich beispielsweise um 3M™ Optical Lighting Film handeln;
- ein in Betrachtungsrichtung vor den Prismenrastern angeordneter Privacyfilter 2b3, z.B. ein Mikrolamellenfilter wie er von 3M™ unter dem Vikuiti™ oder von Shin Etsu als VCF angeboten wird.

Beide Hintergrundbeleuchtungen 2a, 2b nutzen bevorzugt einen gemeinsamen flächigen Strahler 2ab1, wie in Fig. 7 gezeigt. Auch der Diffusor 2ab2 kann von beiden Hintergrundbeleuchtungen 2a, 2b genutzt werden, wenn er entsprechend einstückig umgesetzt wird.

Entsprechend kann der flächige Strahler 2ab1 grundsätzlich aufgebaut sein wie ein Backlight, beispielsweise ein Side-light, Edgelight, Direct LED Backlight, edge LED Backlight, OLED oder ein anderer Flächenstrahler, auf welches die genannten anderen Komponenten aufgebracht sind.

Ferner kann auch der Einsatz eines sogenannten "Directed Backlights", also einer gerichteten zweiten Hintergrundbeleuchtung 2b, vorgesehen sein.

Fig. 8 schließlich zeigt eine Abwandlung eines Bildschirms nach Fig. 1 in der Betriebsart B2, bei dem nicht nur eine Teilfläche A, sondern zwei Teilflächen A1 und A2 an der Außenseite verwendet werden, und der Bildschirm auf diesen beiden Teilflächen in den beiden Betriebsarten B1 und B2 betrieben werden kann, wohingegen der restliche Bereich, hier die restliche Bildfläche des Bildschirms, zwischen den beiden Teilflächen permanent im freien Sichtmodus betrieben wird. Bevorzugt kann die Betriebsart B1 oder B2 für jede der beiden Teilflächen A1 und A2 unabhängig gewählt werden. Die Teilflächen A1, A2 und ggf. weitere Teilflächen können auch so angeordnet sein, dass der restliche Bildschirm in mehrere Bereiche aufgeteilt ist.

Ein erfindungsgemäßer Bildschirm 1 kann zum Beispiel in einem Fahrzeug verwendet werden, nämlich zur wahlweisen Darstellung von Bildinhalten auf der Teilfläche A lediglich für den Beifahrer in der Betriebsart B2 und gleichzeitig für den Fahrer und den Beifahrer in der Betriebsart B1, während die zur Teilfläche A komplementären Teilfläche(n) der Bildfläche des Bildschirms 1 permanent für Fahrer und Beifahrer sichtbar sind. Damit können auf der Teilfläche A z.B. visuelle Entertainment-Daten wie digitales TV, Videos oder Internet-Daten für den Beifahrer dargestellt werden, ohne diese visuell dem Fahrer darzubieten. Dies ermöglicht die Einhaltung von Vorschriften zur Verhinderung der Ablenkung des Fahrers von den Fahraufgaben. Ein erfindungsgemäßer Bildschirm kann gleichsam verwendet werden zur Eingabe oder Anzeige von vertraulichen Daten, beispielweise von PIN-Geheimnummern, E-mails, SMS oder Passwörtern, an Geldautomaten, Zahlungsterminals oder mobilen Geräten. Viele andere Verwendungsfälle sind denkbar.

In allen vorgenannten Ausgestaltungen können die besagten Leuchtmittel LEDs bzw. LED-Zeilen oder Laserdioden sein. Andere Varianten sind denkbar und liegen im Rahmen der Erfindung.

Weiterhin können die gewünschten eingeschränkten Winkelbereiche für den Modus B2 für eine eingeschränkte Sicht auf der Teilfläche A jeweils für die horizontale und vertikale Richtung unabhängig voneinander definiert und umgesetzt werden. Beispielsweise könnte in der vertikalen Richtung ein größerer Winkel (oder ggf. gar keine Einschränkung) sinnvoll sein, als in der horizontalen Richtung, etwa wenn bei Geldautomaten Personen mit unterschiedlicher Größe ein Bild sehen sollen, während der Seiteneinblick stark oder komplett eingeschränkt bleiben soll. Für POS-Zahlterminals sind hingegen auf Grund von Sicherheitsbestimmungen oftmals Sichteinschränkungen im Modus B2 sowohl in horizontaler als in vertikaler Richtung notwendig.

Der vorstehend beschriebene erfindungsgemäße Bildschirm löst die gestellte Aufgabe:
Er erlaubt praktisch gut umsetzbare Lösungen, um eine sichere Darstellung von Informationen durch einen wahlweise eingeschränkten Betrachtungswinkel zu realisieren, während in einer weiteren Betriebsart eine freie, im Betrachtungswinkel uneingeschränkte, Sicht möglich ist. Dabei ist es möglich, den Bildschirm lediglich auf einer Teilfläche seiner Bildfläche entsprechend umzuschalten. Die Erfindung ist mit einfachen Mitteln preisgünstig realisierbar. In beiden Betriebsarten ist die native Auflösung der verwendeten Bildwiedergabeeinrichtung nutzbar. Außerdem wird nur ein geringer Lichtverlust durch die Lösung eingeführt.

Die vorangehend beschriebene Erfindung kann vorteilhaft überall da angewendet werden, wo vertrauliche Daten angezeigt und/oder eingegeben werden, wie etwa bei der PIN-Eingabe oder zur Datenanzeige an Geldautomaten oder Zahlungsterminals oder zur Passworteingabe oder beim Lesen von Emails auf mobilen Geräten. Die Erfindung kann -wie weiter oben beschriebenauch vorteilhaft im PKW angewendet werden.

### Bezugszeichenliste

- A, A1, A2: Teilfläche
- 1: Bildschirm
- 2a: Hintergrundbeleuchtung
- 2b: Hintergrundbeleuchtung
- 2ab1: flächigen Strahler
- 2ab2: Diffusor
- 2b1: Lichtkollimator / Prismenraster
- 2b2: Lichtkollimator / Prismenraster
- 2b3: Privacyfilter / Mikrolamellenfilter
- 2a2: BEF-Schicht
- 2a3: DBEF-Schicht
- 2a4: Neutralfilter zur Abschwächung der Lichtintensität.
- 3: Lichtleiter
- 4: Leuchtmittel
- 5: transmissive Bildgeber
- 6: Auskoppelelemente
- 7: Lichtleiter
- 7a: Leuchtmittel

## Patentansprüche

1. Bildschirm (1), der auf mindestens einer Teilfläche A seiner Bildfläche in zwei Betriebsarten B1 für einen freien Sichtmodus und B2 für einen bezüglich des Blickwinkels eingeschränkten Sichtmodus betrieben werden kann, wobei die restliche Bildfläche des Bildschirms (1) außerhalb der Teilfläche A permanent einen freien, das heißt in bezug auf den Blickwinkel uneingeschränkten Sichtmodus aufweist, umfassend,
- eine flächenartig ausgedehnte erste Hintergrundbeleuchtung (2a), die Licht in einen nicht eingeschränkten Winkelbereich abstrahlt, und die überwiegend unterhalb der restlichen Bildfläche außerhalb der besagten Teilfläche A angeordnet ist,
- mindestens eine flächenartig ausgedehnte zweite Hintergrundbeleuchtung (2b), die Licht in einen eingeschränkten Winkelbereich abstrahlt, und die überwiegend unterhalb der besagten Teilfläche A angeordnet ist,
- einen in Betrachtungsrichtung vor den beiden Hintergrundbeleuchtungen (2a, 2b) angeordneten transmissiven Bildgeber (5),
- einen zwischen dem Bildgeber (5) und den beiden Hintergrundbeleuchtungen (2a, 2b) gelegenen, plattenförmigen transparenten Lichtleiter (3), welcher auf mindestens einer seiner Großflächen und/oder innerhalb seines Volumens Auskoppelelemente (6) zur Auskopplung von Licht aufweist und auf diese Weise an mindestens einer seiner Schmalseiten eingekoppeltes Licht über mindestens eine Großfläche auskoppelt,
- seitlich an mindestens einer Schmalseite des Lichtleiters (3) angeordnete Leuchtmittel (4),
- wobei der Lichtleiter (3) für das von den beiden Hintergrundbeleuchtungen (2a, 2b) ausgehende Licht zu mindestens 70% transparent ist,
- und wobei der Bildschirm so konfiguriert ist, dass in der Betriebsart B1 mindestens die Leuchtmittel (4) eingeschaltet sind, und in der Betriebsart B2 die beiden Hintergrundbeleuchtungen (2a, 2b) einund die Leuchtmittel (4) ausgeschaltet sind.

2. Bildschirm nach Anspruch 1, **dadurch gekennzeichnet dass**, der Lichtleiter (3) auf mindestens einer Teilfläche, deren Flächeninhalt so groß wie der der Teilfläche A ist, bevorzugt jedoch über seine volle Fläche, einen durchschnittlichen Haze-Wert kleiner als 7% aufweist, gemessen gemäß ASTM D1003, wodurch das von der Hintergrundbeleuchtung (2b) mindestens in der Betriebsart B2 in einen eingeschränkten Winkelbereich abgestrahlte Licht beim Durchgang durch den Lichtleiter (3) lediglich geringfügig gestreut wird.

3. Bildschirm nach Anspruch 1 oder 2, **dadurch gekennzeichnet dass**, der Lichtleiter (3) aus einem thermoplastischen oder thermoelastischen Kunststoff oder aus Glas besteht.

4. Bildschirm nach einem der Ansprüche 1 bis 3, **dadurch gekennzeichnet dass** die Auskoppelelemente (6) derart auf mindestens einer der Großflächen und/oder innerhalb des Volumens des Lichtleiters (3) verteilt sind, dass die Auskopplung des von den Leuchtmitteln (4) herrührenden Lichtes aus dem Lichtleiter (3) zu mindestens 80% auf einer der Großflächen des Lichtleiters (3) durchgeführt wird.

5. Bildschirm (1) nach einem der Ansprüche 1 bis 4, **dadurch gekennzeichnet, dass** die Auskoppelelemente (6) aus Mikrolinsen und/oder Mikroprismen und/oder diffraktiven Strukturen und/oder Strukturelementen bestehen.

6. Bildschirm (1) nach einem der Ansprüche 1 bis 4, **dadurch gekennzeichnet, dass** die Auskoppelelemente (6) aus Nanopartikeln, Titandioxid, Bariumsulfat, silsesquioxanen Partikeln und/oder vernetzten Polystyrol-Partikeln mit einer mittleren Partikelgröße von 150 - 500 nm bestehen, welche in einer Konzentration bezogen auf das Gewicht des Lichtleiters (3) von 0.01 - 300 Gew.-ppm (parts per million bezogen auf das Gewicht) eingesetzt werden.

7. Bildschirm (1) nach einem der Ansprüche 1 bis 4, **dadurch gekennzeichnet, dass**
- der Lichtleiter (3) aus einem Matrixkunststoff A und darin homogen verteilten Auskoppelelementen (6) aus einem Polymerisat B besteht,
- der Anteil der Auskoppelelemente (6) bestehend aus Polymerisat B 0,01 bis 3 Gewichtsprozent bezogen auf den Matrixkunststoff A beträgt, und
- die Brechzahl nD(B) des Polymerisats B um mindestens 0,01 Einheiten über der Brechzahl nD(A) des Matrixkunststoffs A liegt.

8. Bildschirm (1) nach einem der vorgenannten Ansprüche, **dadurch gekennzeichnet, dass** die erste Hintergrundbeleuchtung (2a) besteht aus
- einem flächigen Strahler (2ab1), vorzugsweise einem Lichtleiter mit seitlich oder auf der Rückseite angeordneten Leuchtmitteln,
- mindestens einem in Betrachtungsrichtung vor dem flächigen Strahler (2ab1) angeordneten Diffusor (2ab2),
- sowie optional weiteren in Betrachtungsrichtung vor dem flächigen Strahler (2ab1) angeordneten optischen Schichten.

9. Bildschirm nach Anspruch 8, **dadurch gekennzeichnet, dass** die weiteren optischen Schichten als BEF-Schicht (2a2), DBEF-Schicht (2a3) und/oder als Neutralfilter (2a4) zur Abschwächung der Lichtintensität ausgebildet sind.

10. Bildschirm (1) nach einem der vorgenannten Ansprüche, **dadurch gekennzeichnet, dass** die zweite Hintergrundbeleuchtung (2b) besteht aus
- einem flächigen Strahler (2ab1), vorzugsweise einem Lichtleiter mit seitlich oder auf der Rückseite angeordneten Leuchtmitteln,
- mindestens einem in Betrachtungsrichtung vor dem flächigen Strahler (2ab1) angeordneten Diffusor (2ab2),
- mindestens einen in Betrachtungsrichtung vor dem flächigen Strahler (2ab1) angeordneten Lichtkollimator (2b1).

11. Bildschirm nach einem der vorgenannten Ansprüche, **dadurch gekennzeichnet, dass** beide Hintergrundbeleuchtungen (2a, 2b) einen gemeinsamen flächigen Strahler (2ab1) nutzen.

12. Bildschirm (1) nach einem der vorgenannten Ansprüche, **dadurch gekennzeichnet, dass** für die Betriebsart B1 in Abhängigkeit von vorgegebenen Grenzwinkeln σ, γ das ausgekoppelte Licht, welches aus dem Lichtleiter (3) in einem Winkel β austritt, an jedem Punkt der Oberfläche des Lichtleiters (3) in Winkelbereichen, die den Bedingungen 80° > β > γ und/oder -80° < β < -σ, mit 10° < γ < 80° und 10° < σ < 80° genügen, bevorzugt γ = σ = 40° oder γ = σ = 20°, gemessen senkrecht zur Oberfläche des Lichtleiters (3) und in einer von zwei Vorzugsrichtungen maximal 80%, besonders bevorzugt maximal 50% von der Lichtstärke aufweist, die das Licht aufweist, welches von einem solchen Punkt der Oberfläche des Lichtleiters (3) entlang der Normalen der Oberfläche austritt.

13. Verwendung eines Bildschirms (1) nach einem der vorgenannten Ansprüche in einem Fahrzeug zurwahlweisen Darstellung von Bildinhalten auf der Teilfläche A lediglich für den Beifahrer in der Betriebsart B2 und gleichzeitig für den Fahrer und den Beifahrer in der Betriebsart B1, während die zur Teilfläche A komplementären Teilfläche(n) der Bildfläche des Bildschirms (1) permanent für Fahrer und Beifahrer sichtbar sind.

## Claims

1. A display screen (1) that on at least a partial area *A* of its display area can be operated in two operating modes, viz *B1* for a free viewing mode and *B2* for a viewing mode that is restricted with regard to the viewing angle, wherein the residual display area of the display screen (1) outside the partial area *A* permanently maintains a free viewing mode, i.e. a viewing mode that is unrestricted with regard to the viewing angle, comprising
- a first backlight (2a) of planar extension that radiates light in an unrestricted angular range and that, for the greater part, is arranged below the residual display area outside the said partial area *A*,
- at least one second backlight (2b) of planar extension that radiates light in a restricted angular range and that, for the greater part, is arranged below the partial area *A*,
- a transmissive image generator (5) arranged, in the viewing direction, in front of the two backlights (2a, 2b),
- a plate-shaped transparent light guide (3) that is located between the image generator (5) and the two backlights (2a, 2b) and, on at least one of its large surfaces and/or within its volume, is provided with outcoupling elements (6) for the outcoupling of light, so that, through at least one large surface, it outcouples light coupled in through at least one of its edges,
- light sources (4) arranged laterally on at least one of the edges of the light guide (3),
- wherein the light guide (3) is transparent to at least 70% of the light originating from the two backlights (2a, 2b),
- and wherein the display screen is configured in such a way that in mode *B1* at least the light sources (4) are switched on, whereas in mode *B2* the two backlights (2a, 2b) are switched on and the light sources (4) are switched off.

2. The display screen as claimed in claim 1, **characterized in that** the light guide (3), on at least a partial area having a surface area equal to that of the partial area *A*, but preferably on its full area, has a haze value of less than 7%, measured according to ASTM D1003, whereby the light emitted by the backlight (2b) at least in mode *B2* in a restricted angular range is only marginally scattered when it passes the light guide (3).

3. The display screen as claimed in claim 1 or 2, **characterized in that** the light guide (3) consists of a thermoplastic or thermoelastic material or of glass.

4. The display screen as claimed in any of claims 1 through 3, **characterized in that** the outcoupling elements (6) are distributed on at least one of the large surfaces and / or within the volume of the light guide (3) in such a way that at least 80% of the light originating from the light sources (4) is coupled out through one of the large surfaces of the light guide (3).

5. The display screen (1) as claimed in any of claims 1 through 4, **characterized in that** the outcoupling elements (6) consist of microlenses and / or microprisms and / or diffractive structures and / or structural elements.

6. The display screen (1) as claimed in any one of claims 1 through 4, **characterized in that** the outcoupling elements (6) consist of nanoparticles, titanium dioxide, barium sulfate, silsesquioxane particles and/or cross-linked polystyrene particles with a mean particle size of 150 to 500 nm, which are used in a concentration, related to the weight of the light guide (3), of 0.01 to 300 wt.-ppm (parts per million related to the weight).

7. The display screen (1) as claimed in any one of claims 1 through 4, **characterized in that**
- the light guide (3) consists of a matrix plastic *A* and, homogeneously distributed therein, outcoupling elements (6) consisting of a polymerizate *B*,
- the share of the outcoupling elements (6) consisting of polymerizate *B* is 0.01 to 3 wt.-% related to the matrix plastic *A*, and
- the refractive index *nD(B)* of the polymerizate *B* is higher than the refractive index *nD(A)* of the matrix plastic A by at least 0.01 units.

8. The display screen (1) as claimed in any of the preceding claims, **characterized in that** the first backlight (2a) consists of
- a planar emitter (2ab1), preferably a light guide with light sources arranged laterally or on the rear surface,
- at least one diffuser (2ab2) arranged (as seen in the viewing direction) in front of the planar emitter (2ab1), and
- optionally, additional optical layers arranged (as seen in the viewing direction) in front of the planar emitter (2ab1).

9. The display screen as claimed in claim 8, **characterized in that** the additional optical layers are configured as a BEF layer (2a2), a DBEF layer (2a3) and/or as a neutral filter (2a4) for attenuating the light intensity.

10. The display screen (1) as claimed in any of the preceding claims, **characterized in that** the second backlight (2a) consists of
- a planar emitter (2ab1), preferably a light guide with light sources arranged laterally or on the rear surface,
- at least one diffuser (2ab2) arranged (as seen in the viewing direction) in front of the planar emitter (2ab1), and
- at least one light collimator (2b1) arranged (as seen in the viewing direction) in front of the planar emitter (2ab1).

11. The display screen (1) as claimed in any of the preceding claims, **characterized in that** both backlights (2a, 2b) use a planar emitter (2b1) in common.

12. The display screen (1) as claimed in any of the preceding claims, **characterized in that** in mode *B1*, as a function of specified limiting angles σ, γ, the outcoupled light exiting from the light guide (3) at an angle β will, at every point of the light guide (3) surface in angular ranges satisfying the conditions of 80° > β > γ and/or -80° < β < -σ, with 10° < γ < 80° and 10° < σ < 80° but preferably with γ = σ = 40° or γ = σ = 20°, measured normal to the light guide (3) surface and in at least one of two preferred directions, have maximally 80% or, with particular preference, maximally 50% of the light intensity of the light exiting from such a point of the light guide (3) surface along the surface normal.

13. Use of a display screen (1) as claimed in any of the preceding claims in a vehicle for selectively displaying image contents, in operating mode *B2*, on the partial area A for the front-seat passenger only and, in operating mode *B1*,simultaneously for the driver and the front-seat passenger, whereas the partial area(s) of the display area of the display screen (1) that is/are complementary to the partial area A are permanently visible to the driver and the front-seat passenger.

## Revendications

1. Ecran (1) pouvant être manipulé sur au moins une zone partielle A de sa surface d'image dans deux modes de fonctionnement B1 pour un mode de visualisation libre et B2 pour un mode de visualisation qui est restreint relativement à l'angle de vue, dans lequel le reste de la surface d'image de l'écran (1) en dehors de la zone partielle A a en permanence un mode de visualisation libre, c.-à-d. un mode de visualisation qui n'est pas restreint relativement à l'angle de vue, comprenant
- un premier rétro-éclairage extensif plat (2a), qui émet une lumière dans une plage angulaire non restreinte, et qui est agencé essentiellement en dessous du reste de la surface d'image en dehors de ladite zone partielle A,
- au moins un deuxième rétro-éclairage extensif plat (2b), qui émet une lumière dans une plage angulaire restreinte, et qui est agencé essentiellement en dessous de ladite zone partielle A,
- un système d'imagerie transmissif (5) agencé devant les deux rétro-éclairages (2a, 2b) dans le sens de visualisation,
- un guide de lumière transparent en forme de plaque (3) situé entre le système d'imagerie (5) et les deux rétro-éclairages (2a, 2b), lequel, sur au moins une de ses grandes surfaces et/ou à l'intérieur de son volume, présente des éléments de couplage externe (6) pour coupler en sortie de la lumière et de cette façon couple en sortie la lumière couplée dans au moins un de ses côtés étroits par le biais d'au moins une grande surface,
- des moyens d'éclairage (4) agencés latéralement au niveau d'au moins un côté étroit du guide de lumière (3),
- dans lequel le guide de lumière (3) est transparent à au moins 70% à la lumière provenant des deux rétro-éclairages (2a, 2b),
- et dans lequel l'écran est configuré de telle sorte que, dans le mode de fonctionnement B1, au moins les moyens d'éclairage (4) soient allumés, et dans le mode de fonctionnement B2, les deux rétro-éclairages (2a, 2b) soient allumés et les moyens d'éclairage (4) soient éteints.

2. Ecran selon la revendication 1, **caractérisé en ce que** le guide de lumière (3), sur au moins une zone partielle, la zone de surface de celle-ci étant aussi grande que celle de la zone partielle A, présente toutefois de préférence, sur toute sa surface, une valeur de voile moyenne de moins de 7 %, mesurée selon la norme ASTM D1003, moyennant quoi la lumière émise par le rétro-éclairage (2b), au moins dans le mode de fonctionnement B2, dans une plage angulaire restreinte n'est diffusée que légèrement quand elle traverse le guide de lumière (3).

3. Ecran selon la revendication 1 ou 2, **caractérisé en ce que** le guide de lumière (3) consiste en un thermoplastique ou plastique thermoélastique ou verre.

4. Ecran selon l'une des revendications 1 à 3, **caractérisé en ce que** les éléments de couplage externe (6) sont distribués sur au moins une des grandes surfaces et/ou à l'intérieur du volume du guide de lumière (3) de telle sorte qu'au moins 80 % de la lumière provenant des moyens d'éclairage (4) soit couplée en sortie du guide de lumière (3) sur une des grandes surfaces du guide de lumière (3).

5. Ecran (1) selon l'une des revendications 1 à 4, **caractérisé en ce que** les éléments de couplage externe (6) consistent en microlentilles et/ou microprismes et/ou structures de diffraction et/ou éléments structurels.

6. Ecran (1) selon l'une des revendications 1 à 4, **caractérisé en ce que** les éléments de couplage externe (6) consistent en nanoparticules, dioxyde de titane, sulfate de baryum, particules de silsesquioxane et/ou particules de polystyrène réticulé à grosseur de particule moyenne de 150 - 500 nm, lesquels sont utilisés dans une concentration relative au poids du guide de lumière (3) de 0,01 - 300 ppm en poids (parties par million en poids).

7. Ecran (1) selon l'une des revendications 1 à 4, **caractérisé en ce que**
- le guide de lumière (3) consiste en un plastique matriciel A et, répartis de manière homogène dans celui-ci, en éléments de couplage externe (6) réalisés en un polymérisat B,
- la proportion des éléments de couplage externe (6) consistant en un polymérisat B est de 0,01 à 3 pour cent en poids par rapport au plastique matriciel A, et
- l'indice de réfraction nD(B) du polymérisat B dépasse d'au moins 0,01 unité l'indice de réfraction nD(A) du plastique matriciel A.

8. Ecran (1) selon l'une des revendications précédentes, **caractérisé en ce que** le premier rétro-éclairage (2a) consiste en
- un émetteur plan (2ab1), de préférence un guide de lumière présentant des moyens d'éclairage agencés latéralement ou sur le côté arrière,
- au moins un diffuseur (2ab2) agencé devant l'émetteur plan (2ab1) dans le sens de visualisation,
- ainsi que, facultativement, d'autres couches optiques agencées devant l'émetteur plan (2ab1) dans le sens de visualisation.

9. Ecran selon la revendication 8, **caractérisé en ce que** les autres couches optiques sont formées en tant que couche BEF (2a2), couche DBEF (2a3) et/ou filtre neutre (2a4) pour atténuer l'intensité lumineuse.

10. Ecran (1) selon l'une des revendications précédentes, **caractérisé en ce que** le deuxième rétro-éclairage (2b) consiste en
- un émetteur plan (2ab1), de préférence un guide de lumière présentant des moyens d'éclairage agencés latéralement ou sur le côté arrière,
- au moins un diffuseur (2ab2) agencé devant l'émetteur plan (2ab1) dans le sens de visualisation,
- au moins un collimateur de lumière (2b1) agencé devant l'émetteur plan (2ab1) dans le sens de visualisation.

11. Ecran selon l'une des revendications précédentes, **caractérisé en ce que** les deux rétro-éclairages (2a, 2b) utilisent un émetteur plan commun (2ab1).

12. Ecran (1) selon l'une des revendications précédentes, **caractérisé en ce que**, pour le mode de fonctionnement B1 dépendant d'angles critiques prédéfinis σ, γ, la lumière couplée en sortie qui sort du guide de lumière (3) à un angle β, à chaque point de la surface du guide de lumière (3) dans des plages angulaires qui satisfont les conditions 80° > β > γ et/ou -80° < β < -σ, avec 10° < γ < 80° et 10° < σ < 80°, de préférence γ = σ = 40° ou γ = σ = 20°, mesurée perpendiculairement à la surface du guide de lumière (3) et dans un de deux sens préférés, présente un maximum de 80%, en particulier de préférence un maximum de 50% de l'intensité lumineuse de la lumière qui sort depuis un tel point de la surface du guide de lumière (3) le long de la normale de la surface.

13. Utilisation d'un écran (1) selon l'une des revendications précédentes dans un véhicule, pour la représentation facultative de contenus d'images sur la zone partielle A uniquement pour le passager avant dans le mode de fonctionnement B2, et simultanément pour le conducteur et le passager avant dans le mode de fonctionnement B1, tandis que la ou les zones partielles de la surface d'image de l'écran (1) qui sont complémentaires de la zone partielle A sont visibles en permanence par le conducteur et le passager avant.
